# EUROPEAN PATENT APPLICATION

(11) **EP 4 723 044 A1**
(43) Date of publication of application: **08.04.2026**
(21) Application number: 24818684.3
(22) Date of filing: 05.06.2024
(51) Int. Cl.: G06T 13/80, H04N 21/6332, G06T 15/00

(54) **MULTI-PERSON COLLABORATION METHOD FOR THREE-DIMENSIONAL CONTENT, AND DEVICE**

(30) Priority: 05.06.2023 CN 202310659511
(71) Applicant: Beijing Irisview Technology Co., Ltd., Beijing 100083 (CN)
(72) Inventor: YUE, Yating, Beijing 100083 (CN); FAN, Shunhao, Beijing 100083 (CN); ZHANG, Haiyue, Beijing 100083 (CN)
(74) Representative: IP TRUST SERVICES
(86) International application number: PCT/CN2024/097522
(87) International publication number: WO 2024/251152

(57) **Abstract**

The present disclosure relates to the technical field of computer systems, computer graphics, and human-computer interaction, and particularly to a multi-person collaboration method for three-dimensional content and a device. The method comprises: a sharing provider device being responsible for processing application logic, generating a rendering instruction for a shared rendering object, and then sending the rendering instruction to a sharing demander device; and the sharing demander device rendering the shared rendering object according to the received rendering instruction and view information of respective users. The method realizes the transmission of the rendering instruction replacing the transmission of a shared picture, reduces the data transmission pressure between the sharing provider device and the sharing demander device, lowers the transmission latency, and improves the multi-person sharing experience in a multi-person collaboration system.

## Description

### CROSS REFERENCE TO RELATED APPLICATION

The present disclosure claims the priority of the Chinese invention patent with an application number of 202310659511.3, entitled "THREE-DIMENSIONAL CONTENT MULTI-PERSON COLLABORATION METHOD, APPARATUS AND SYSTEM, AND DEVICE", and filed on June 5, 2023, the entire content of which is incorporated herein by reference.

### TECHNICAL FIELD

The present disclosure relates to the technical field of computer systems, computer graphics and human-computer interaction, and particularly to a multi-person collaboration method for three-dimensional content, and a device.

### BACKGROUND

In conventional two-dimensional (2D) interfaces, the multi-person collaboration mostly involves a sharing provider device transmitting a shared picture to a sharing demander device. However, in three-dimensional (3D) interfaces, if the multi-person collaboration method for the 2D interfaces is followed, where a sharing provider transmits a rendered 3D picture to a sharing demander, the following several problems will arise: firstly, due to the sharing of 3D content, it is necessary to render different pictures according to the respective different viewpoints of the demanders, and each additional demander will require one more round of rendering by the provider, resulting in a heavy rendering pressure. Secondly, in order to enable the demanders to perceive a binocular stereoscopic effect, each frame of picture requires binocular content. The transmission of the 3D picture thus leads to an enormous transmission pressure, while also increasing a decoding pressure on the sharing demander. Finally, since the provider needs to receive user viewpoints from the respective demanders, render corresponding pictures for respective demanders based on the received user viewpoints and then transmit them, and at the same time, encoding and decoding are required to be completed separately on a provider side and a demander side, the overall latency for the demander user to see the picture will be correspondingly increased.

At present, an application on the sharing provider device employs an instruction transmission mode to synchronize data among a plurality of users for the sharing of content and pictures. However, the instruction sent by the application is self-defined data according to its own specific logic. Each user needs to install the corresponding application on the local device, where the application performs rendering and interaction locally, and this is only applicable to this application.

There is an urgent need for a multi-person collaboration method for 3D content, so as to solve the problems that due to the high pressure on 3D picture transmission and rendering as well as high picture latency, efficient multi-person sharing and collaboration for 3D content cannot be achieved under hardware constraints.

### SUMMARY

In order to solve the problems in the prior art, the embodiments of the present disclosure provide a multi-person collaboration method for 3D content and a device. A sharing provider device is responsible for processing a rendering event according to an application logic, wherein the rendering event may be triggered by a sharing provider itself according to the application logic, or by the sharing provider receiving operation information from a sharing provider user, or alternatively by operation information from a sharing demander user. Subsequently, the sharing provider device generates a rendering instruction for a shared rendering object according to the rendering event, and sends the rendering instruction to a sharing demander device, which renders the shared rendering object according to the rendering instruction and view information of the sharing demander user. In this method, the rendering instruction is universal, and the sharing demander device does not need to perform any application logic processing to be shared, and can simultaneously support a plurality of applications of the sharing provider or connect to a plurality of sharing providers. In a multi-person collaboration system, the transmission of a shared picture can be replaced with the transmission of the rendering instruction, which reduces the data transmission pressure between the sharing provider device and the sharing demander device, lowers the transmission latency, and improves the multi-person sharing experience of 3D content.

In order to solve the above technical problems, the specific technical solutions in the present disclosure are as follows.

In an aspect, an embodiment of the present disclosure provides a multi-person collaboration method for three-dimensional (3D) content, which is applicable to a multi-person collaboration system comprising devices supporting 3D content display, and performed by a sharing provider device in the multi-person collaboration system, the method including:
generating, according to an application logic, a rendering instruction for a shared rendering object, wherein the rendering instruction is used to guide generation of the rendered image of the shared rendering object; and
sending the rendering instruction to a sharing demander device in the multi-person collaboration system, so that the sharing demander device renders the shared rendering object according to the received rendering instruction to obtain a rendered picture.

In another aspect, an embodiment of the present disclosure further provides a multi-person collaboration method for three-dimensional (3D) content, which is applicable to a multi-person collaboration system comprising devices supporting 3D content display, and performed by a sharing demander device in the multi-person collaboration system, the method including:
receiving a rendering instruction for a shared rendering object sent by a sharing provider device, wherein the rendering instruction is generated by the sharing provider device according to an application logic, wherein the rendering instruction is used to guide generation of the rendered image of the shared rendering object;
obtaining view information of a sharing demander user; and
rendering the shared rendering object according to the view information of the sharing demander user and each of the rendering instructions to obtain a rendered picture containing the shared rendering object.

In still another aspect, an embodiment of the present disclosure further provides a computer device, including a memory, a processor, and a computer program stored in the memory and runnable on the processor, wherein when executing the computer program, the processor implements the afore-mentioned method.

According to the embodiments of the present disclosure, when a sharing provider device and a sharing demander device share 3D contents, the sharing provider device firstly generates a rendering instruction for a rendering object according to an application logic, and sends the rendering instruction to the sharing demander device. Compared with the conventional method where the sharing provider device and the sharing demander device synchronously render the image, the rendering instruction sent by the sharing provider device in the present disclosure is much smaller in size than the rendered image, thereby effectively reducing the data transmission pressure between the sharing provider device and the sharing demander device and lowering the transmission latency. Finally, the sharing demander device renders the shared rendering object according to the received rendering instruction to obtain a rendered picture. The present disclosure can simultaneously support cross-device multi-person sharing scenarios, thus realizing the transmission of the rendering instruction replacing the transmission of the shared rendered picture, which reduces the data transmission pressure between the sharing provider device and the sharing demander device, lowers the transmission latency, and improves the multi-person sharing experience of 3D content.

### BRIEF DESCRIPTION OF DRAWINGS

In order to explain the technical solutions in the embodiments of the present disclosure or in the prior art more clearly, the drawings required for describing the embodiments or the prior art are briefly introduced below.
FIG. 1 illustrates a schematic diagram of an implementation architecture of a multi-person collaboration system for three-dimensional (3D) content according to an embodiment of the present disclosure;
FIGS. 2 and 3 illustrate flowcharts of a multi-person collaboration method for 3D content according to an embodiment of the present disclosure;
FIG. 4 illustrates the steps of generating, according to an application logic, a rendering instruction for a shared rendering object according to an embodiment of the present disclosure;
FIG. 5 illustrates the steps of rendering shared rendering objects for a plurality of applications on a sharing provider device according to an embodiment of the present disclosure;
FIG. 6 illustrates the steps of rendering shared rendering objects for a plurality of applications on a sharing provider device according to rendering instructions and view information of sharing demander users according to an embodiment of the present disclosure;
FIG. 7 illustrates a data flow diagram of a process of adjusting a shared rendering object according to an embodiment of the present disclosure;
FIG. 8 illustrates the steps of interaction between a sharing provider device and a sharing demander device according to an embodiment of the present disclosure;
FIGS. 9 and 10 illustrate structural diagrams of a multi-person collaboration apparatus for 3D content according to an embodiment of the present disclosure;
FIG. 11 illustrates a structural diagram of a computer device according to an embodiment of the present disclosure; and
FIG. 12 illustrates a schematic diagram depicting three users, i.e., first, second and third users, using their respective devices to play chess through an interaction permission control method according to an embodiment of the present disclosure.

### [Description of reference signs]

101: sharing provider device;
1011: interaction processing module;
1012: rendering processing module;
1013: first rendering execution module;
1014: first display device;
102: sharing demander device;
1021: interaction sending module;
1022: second rendering execution module;
1023: second display device;
901: rendering event receiving unit;
902: rendering instruction generation unit;
903: rendering instruction sharing unit;
1001: rendering instruction receiving unit;
1002: view information obtaining unit;
1003: rendering unit;
1102: computer device;
1104: processing device;
1106: storage resource;
1108: drive mechanism;
1110: input/output module;
1112: input device;
1114: output device;
1116: presentation device;
1118: graphical user interface;
1120: network interface;
1122: communication link;
1124: communication bus.

### DETAILED DESCRIPTION

The technical solutions in the embodiments of the present disclosure will be described clearly and completely below with reference to the drawings for the embodiments of the present disclosure.

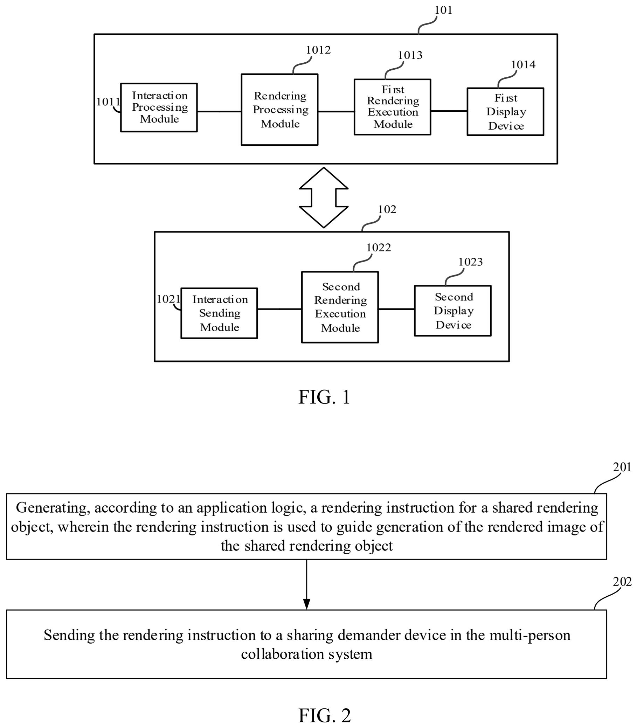

FIG. 1 illustrates a schematic diagram of an implementation architecture of a multi-person collaboration system for three-dimensional (3D) content according to an embodiment of the present disclosure, which is applicable to a multi-person collaboration system including devices supporting 3D content display. The multi-person collaboration system includes one or more devices supporting 3D content display of a sharing demander side (i.e., a sharing demander device 102) and at least one sharing provider device 101. The device supporting 3D content display may be a 3D or 4D XR device, a projection device, etc. The sharing provider device 101 may include a display device for displaying 3D content (e.g., a first display device 1014) or may not include such a display device (e.g., the sharing provider device 101 is a server). The sharing provider device shall include a rendering processing module 1012, which receives a rendering event generated according to an application logic and converts the rendering event into a rendering instruction. The sharing provider device 101 then sends the rendering instruction to the sharing demander device 102. If the user of the sharing provider device 101 needs to view a rendered picture, the sharing provider device 101 may further include a first rendering execution module 1013 and the first display device 1014. The rendering processing module 1012 sends the rendering instruction to the first rendering execution module 1013, which renders a shared rendering object according to the received rendering instruction and view information of a sharing provider user, obtains a rendered picture including the shared rendering object, and displays the rendered picture to a sharing provider user through the first display device 1014.

The sharing provider device 101 may further include an interaction processing module 1011, which receives a user interaction event from either the sharing provider or the sharing demander, triggers a rendering event according to an application logic, and sends the rendering event to the rendering processing module 1012. The rendering event may also not be triggered by the interaction event. For example, a time-varying event, a specific network message event, etc. can all trigger the rendering event according to an application logic.

The sharing demander device 102 shall include a second rendering execution module 1022. The rendering processing module 1012 of the sharing provider device 101 may send the rendering instruction through a network interface card (NIC) of the sharing provider device 101 to the sharing demander device 102 by means of network communication. The NIC of the sharing demander device 102 receives and forwards the rendering instruction to the second rendering execution module 1022 of the sharing demander device 102. The second rendering execution module 1022 renders the shared rendering object according to the received rendering instruction to obtain a rendered picture including the shared rendering object. Of course, the second rendering execution module 1022 may also render the shared rendering object according to the received rendering instruction and the view information of the sharing demander user, and display the rendered picture to the sharing demander user through a second display device 1023.

The sharing demander device 102 may include an interaction sending module 1021. The interaction sending module 1021 receives and converts the user's operation information into an interaction event, and sends the interaction event through the NIC of the sharing demander device 102 to the sharing provider device 101 by means of network communication. The NIC of the sharing provider device 101 receives and forwards the interaction event to the interaction processing module 1011 of the sharing provider device 101.

The sharing provider device may include one or more shared applications, each of which may have its own interaction processing module and rendering processing module, or multiple applications may share a single interaction processing module and a single rendering processing module. The sharing demander device may receive the rendering instructions from a plurality of applications on a plurality of sharing provider devices.

Both the sharing provider user and the sharing demander user may perform interactions on their respective devices. The sharing provider user may set an interaction permission of the sharing demander device by the sharing provider device 101 and send the interaction permission to the sharing demander device 102. The sharing demander device 102 sets an operation permission of the sharing demander user on the rendered picture according to the interaction permission. In a case where an operation is permitted, the sharing demander device 102 generates an interaction event from the operation information of the sharing demander user and sends the interaction event to the sharing provider device 101. The interaction processing module 1011 of the sharing provider device 101 performs application logic processing, generates a rendering instruction for the interaction event, and sends the rendering instruction to the interaction sending module 1021 of the sharing demander device 102 for rendering.

In the embodiments of the present disclosure, the sharing provider device 101 and the sharing demander device 102 may also transmit data in any other data transmission mode, which is not limited in the embodiments of the present disclosure. In addition, it shall be noted that FIG. 1 only illustrates one scenario provided by the present disclosure, and in practice, other scenarios may also be included, which are not limited by the present disclosure.

In the prior art, each sharing provider device renders its own rendering object to obtain a rendered image, which is then sent to the system including the devices for composition. If the rendered image needs to be shared with the sharing demander users, re-rendering must be performed separately on the device of the sharing provider user according to the viewpoint of each sharing demander user. Due to the high-resolution requirement of XR, the rendered image has a high resolution and occupies a large storage space, which results in enormous transmission pressure for transmitting the high-resolution rendered image and increases the transmission latency. Meanwhile, the sharing provider device is confronted with a high rendering pressure.

In order to solve the problems in the prior art, the embodiments of the present disclosure provide a multi-person collaboration method for 3D content. Firstly, a sharing provider device is responsible for processing application logic and generating a rendering instruction for a shared rendering object; and then the rendering instruction is sent to a sharing demander device; finally, the shared rendering object is rendered separately according to the rendering instruction. The sharing provider device includes a plurality of applications, which generate the rendering instructions for a plurality of shared rendering objects respectively and send the rendering instructions to the sharing demander devices.

FIG. 2 illustrates a flowchart of a multi-person collaboration method for 3D content according to an embodiment of the present disclosure. FIG. 2 depicts a process of 3D content sharing between a sharing provider device and a sharing demander device, but more or fewer operational steps may be included based on conventional or non-inventive efforts. The order of steps listed in the embodiment is merely one of various execution orders and does not represent the only execution order. During actual implementation of the product, the steps may be executed sequentially or in parallel in accordance with the method illustrated in the embodiments or the drawings. Specifically, as illustrated in FIG. 2, the method may be performed by a sharing provider device and may include the following steps.

Step 201: generating, according to an application logic, a rendering instruction for a shared rendering object, wherein the rendering instruction is used to guide the generation of the rendered image of the shared rendering object; and
Step 202: sending the rendering instruction to a sharing demander device in a multi-person collaboration system.

The sharing demander device renders the shared rendering object according to the received rendering instruction to obtain a rendered picture.

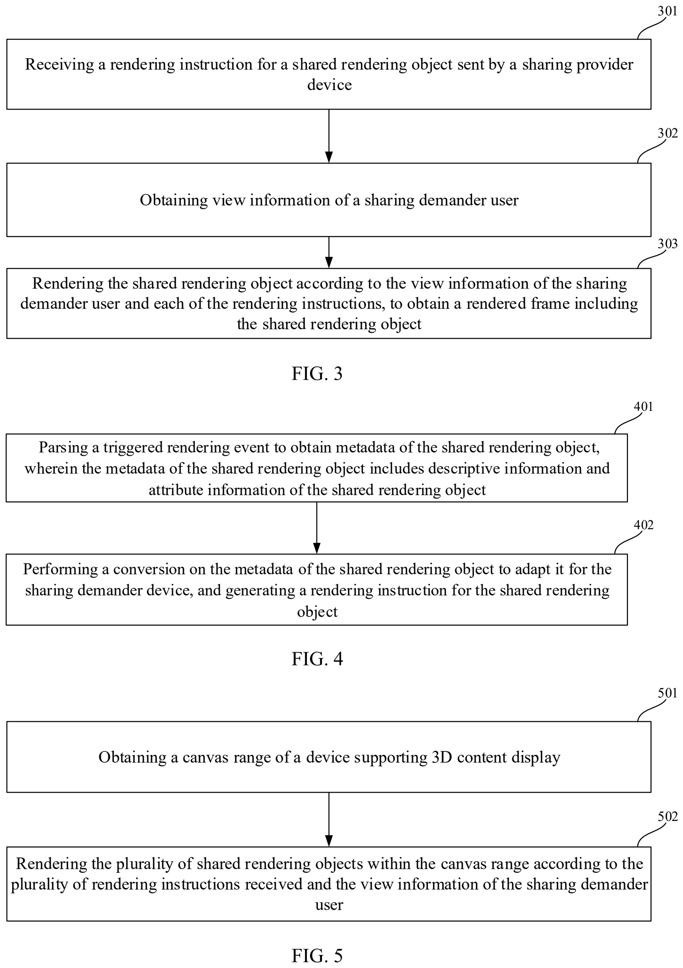

With respect to Step 201, as illustrated in FIG. 4, the generating, according to an application logic, a rendering instruction for a shared rendering object further includes:
Step 401: parsing a triggered rendering event to obtain metadata of the shared rendering object, wherein the metadata of the shared rendering object includes descriptive information and attribute information of the shared rendering object; and
Step 402: performing a conversion on the metadata of the shared rendering object to adapt it for the sharing demander device, and generating a rendering instruction for the shared rendering object.

The rendering event in the present disclosure may be operation information of the sharing provider user, or content generated internally by the sharing provider device itself. For example, when a sharing provider user manipulates a handheld controller to customize a rendering object, the sharing provider device detects an operation of the sharing provider user and then generates a rendering event according to the operation information of the sharing provider user. The metadata of the shared rendering object includes descriptive information and attribute information of the shared rendering object. The descriptive information of the shared rendering object includes picture or video content, text content, model geometric information, material, texture, etc. The attribute information of the shared rendering object includes position, rotation, scaling, transparency, animation, whether interaction is supported, ownership information of the associated device or application, whether it is displayed, etc.

In which, the parsing a triggered rendering event further includes:
parsing the triggered rendering event to create the 3D content to be rendered. The 3D content may be directly generated or parsed by reading a file. The 3D content may be described by means of a conventional 3D model method based on geometry, material, etc., and read in a 3D model file format like fbx, obj, etc., or described in any other way such as NeRF. The file of the 3D content may also be in any other self-defined file format. The sharing provider device parses and converts the rendering event into the metadata of the shared rendering object, i.e., the descriptive information (e.g., model geometric information, text content and material) and the attribute information (e.g., position, rotation and scaling) of the shared rendering object.

For example, the required shared rendering object is a "puppy". The "puppy" has its own animation effect A. When the sharing provider user clicks or touches the "puppy", another animation effect B is triggered. In this case, the animation effect B is the rendering event.

The sharing provider device receives the rendering event, creates the 3D content of the animation effect B to be rendered, and parses and converts the animation effect B into metadata, which includes not only the descriptive information (e.g., model geometric information and material) but also the attribute information (e.g., position, rotation and scaling) of the "puppy".

The performing a conversion on the metadata of the shared rendering object to adapt it for the sharing demander device, and generating a rendering instruction for the shared rendering object further includes:
performing temporal serialization processing on the metadata of the shared rendering object to obtain frame metadata of the shared rendering object; and
generating a control instruction corresponding to the frame metadata of the shared rendering object based on rendering logic of the sharing demander device.

The rendering instruction at this point includes both the frame metadata of the shared rendering object and a control instruction corresponding to the frame metadata. Both the frame metadata and the control instruction are transmitted to the sharing demander device, which performs rendering to obtain a rendered picture.

The sharing demander device rendering the shared rendering object according to the received rendering instruction specifically includes:
the sharing demander device renders the shared rendering object according to the received rendering instruction and the view information of the sharing demander user.

In addition, the rendered picture for the sharing demander user may be displayed to the sharing demander user by the second display device 1023 of the sharing demander device.

Correspondingly, an embodiment of the present disclosure further provides a multi-person collaboration method for 3D content, which is performed by a sharing demander device. As illustrated in FIG. 3, the method may include:
Step 301: receiving a rendering instruction for a shared rendering object sent by a sharing provider device;
   wherein the rendering instruction is generated by the sharing provider device according to an application logic, wherein the rendering instruction is used to guide the generation of the rendered image of the shared rendering object;
Step 302: obtain view information of a sharing demander user; and
Step 303: rendering the shared rendering object according to the view information of the sharing demander user and each of the rendering instructions, to obtain a rendered picture including the shared rendering object.

By virtue of the method according to the embodiment of the present disclosure, when a sharing provider device and a sharing demander device share 3D content, the sharing provider device firstly generates a rendering instruction for a shared rendering object according to an application logic, and sends the rendering instruction to the sharing demander device. Compared with the conventional method where the sharing provider device and the sharing demander device synchronously render the image, the rendering instruction sent by the sharing provider device in the present disclosure is much smaller in size than the rendered image and is universal. Therefore, the method not only effectively reduces the data transmission pressure between the sharing provider device and the sharing demander device and lowers the transmission latency, but also is applicable to various scenarios. Finally, the sharing demander device renders the shared rendering object according to the received rendering instruction to obtain a rendered picture. Of course, the sharing demander device may also render the shared rendering object according to the received rendering instruction and the view information of the sharing demander user to obtain a rendered picture. The present disclosure can simultaneously support cross-device multi-person sharing scenarios, thus realizing the transmission of the rendering instruction replacing the transmission of the shared picture, which reduces the data transmission pressure between the sharing provider device and the sharing demander device, lowers the transmission latency, and improves the multi-person sharing experience of 3D content.

In the embodiments of the present disclosure, the rendering instruction is not an image obtained by rendering the shared rendering object, but rather is used to guide the generation of the rendered image of the shared rendering object. The rendering instruction refers to any instruction that can control hardware to perform picture rendering. For example, the rendering instruction as described above may include two parts: one part is any content that can be converted into a hardware instruction, and the other part is a hardware instruction that controls hardware to perform picture rendering. The type of the hardware instruction may be a GPU instruction, such as a GPU API like OpenGL/Vulkan/DirectX, etc. The present disclosure does not impose limitations on the specific form of the rendering instruction.

In the embodiments of the present disclosure, the shared rendering objects of a plurality of applications may be shared, and respective rendering instructions thereof may be sent to the sharing demander device separately. The sharing demander device then renders the plurality of shared rendering objects according to the plurality of rendering instructions received and the view information of the sharing demander user. In contrast, in the conventional methods, each sharing provider device has a corresponding canvas range, meaning that the sharing provider device can only render an image within the specified canvas range. In other words, the portion of the shared rendering object within the specified canvas range can be rendered, while the portion outside the canvas range cannot be rendered. Therefore, interaction effects among a plurality of shared rendering objects cannot be achieved, resulting in low flexibility in expression and interaction of the XR system and relatively monotonous user experiences.

Compared with the conventional method in which an application renders an image, the present disclosure removes the limitation that a shared rendering object can only be rendered within a canvas range of the sharing provider device, by means of transmitting a rendering instruction. Specifically, according to an embodiment of the present disclosure, as illustrated in FIG. 5, the sharing demander device rendering the plurality of shared rendering objects of the sharing provider device according to the plurality of rendering instructions received and the view information of the sharing demander user further includes:
Step 501: obtaining a canvas range of a device supporting 3D content display; and
Step 502: rendering the plurality of shared rendering objects within the canvas range according to the plurality of rendering instructions received and the view information of the sharing demander user.

In the embodiments of the present disclosure, the canvas range of the device supporting 3D content display refers to the range of an entire display interface. The sharing demander device may obtain the range of the entire display interface by invoking a system hardware interface, and then perform rendering according to the rendering instruction at the position of the rendering object specified by the sharing demander user within the entire display interface. With the method of the present disclosure, since the user can freely specify the position of the rendering object in the display interface, interaction between a plurality of rendering objects can be achieved, which enriches the user experiences.

In the prior art, the sharing provider device renders the shared rendering object. When compositing the rendered images sent by all the sharing provider devices, the sharing demander device needs to calculate the occlusion relationship between the rendered images according to the positions of the rendered images and the viewpoint of the sharing demander user, and remove the occluded portion in each image. In a 2D multitasking system, the occlusion conditions can be known because the viewpoint is fixed and all the pictures are complete rectangular areas. In contrast, the viewpoint of a 3D multitasking system changes in each frame, and minor variations exist even if there is no movement. In addition, the content of the picture of the 3D application is irregular and may contain a transparent area, resulting in relatively complex occlusion conditions. Calculating such information frame by frame and transmitting it to the application incurs considerable overhead, and the performance loss is even greater than rendering all content without considering occlusion. Therefore, the sharing provider device can only render the entire object, and it performs redundant rendering of the portion that the sharing demander device needs to remove during composition, which results in a waste of computing resources of the sharing provider device.

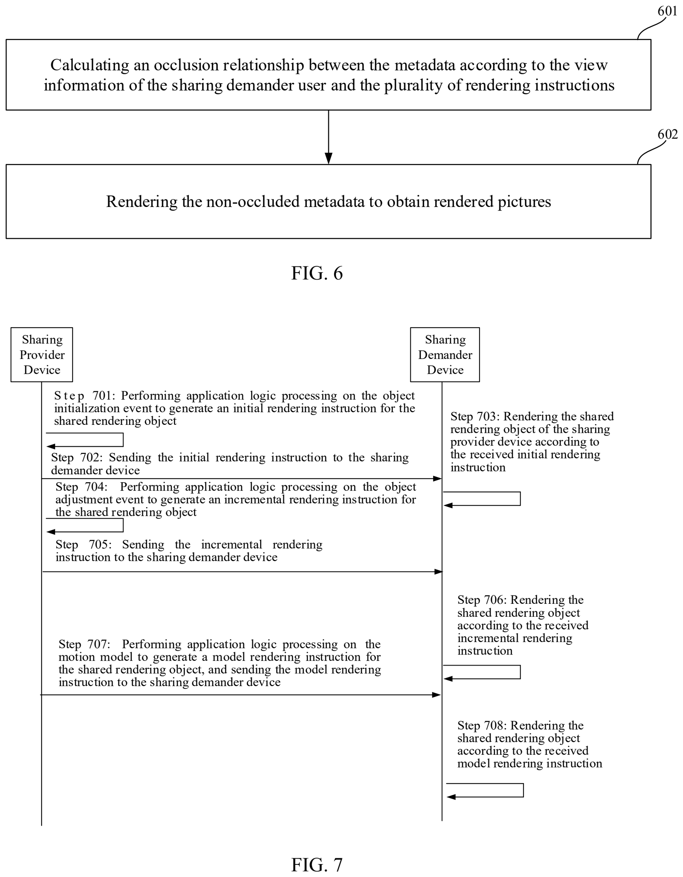

In the present disclosure, the sharing provider device no longer performs picture rendering on the shared rendering objects, but sends the rendering instructions to the sharing demander device, and the sharing demander device performs rendering according to the plurality of rendering instructions received. Since the sharing demander device obtains the metadata of the shared rendering objects, the sharing demander device may calculate the occlusion relationship between the shared rendering objects according to the metadata, and then only render the non-occluded metadata. Specifically, according to an embodiment of the present disclosure, as illustrated in FIG. 6, the rendering the plurality of shared rendering objects according to the rendering instructions and the view information of the sharing demander user further includes:
Step 601: calculating an occlusion relationship between the metadata according to the view information of the sharing demander user and the plurality of rendering instructions; and
Step 602: rendering the non-occluded metadata to obtain rendered pictures.

In the embodiments of the present disclosure, the step of calculating the occlusion relationship is a basic operation of graphics rendering, and based on depth detection, this process has been encapsulated in a general-purpose API such as OpenGL and executed at a GPU driver layer. The metadata transmission mode in the embodiments of the present disclosure can provide the GPU with sufficient 3D scene information for exclusion.

It can be understood that with the method illustrated in FIG. 6, the sharing demander device realizes first calculation of the occlusion relationship between the metadata and then rendering only the non-occluded metadata, thereby reducing the calculation amount of the rendering and saves the calculation resources.

In the prior art, since the sharing demander device is only responsible for compositing the received rendered images, without processing the metadata of the shared rendering object, if the shape, the color, the position, and the like of the shared rendering object change, the sharing provider device needs to re-render the changed shared rendering object and send the re-rendered images to the sharing demander device for composition. If the shared rendering object continuously moves and changes, the sharing provider device needs to render the shared rendering object at each moment to generate the rendered images for each frame, and then send the rendered image at each frame to the sharing demander device in sequence. This method results in an excessive amount of data transmitted between the sharing provider device and the sharing demander device, which causes a significant transmission latency.

In order to solve the above problem, according to an embodiment of the present disclosure, the metadata of the shared rendering object further includes incremental information, and the rendering event includes an object initialization event and an object adjustment event.

As illustrated in FIG. 7, the method further includes:
Step 701: the sharing provider device performing application logic processing on the object initialization event to generate an initial rendering instruction for the shared rendering object;
Step 702: the sharing provider device sends the initial rendering instruction to the sharing demander device;
Step 703: the sharing demander device renders the shared rendering object of the sharing provider device according to the received initial rendering instruction;
Step 704: the sharing provider device performing application logic processing on the object adjustment event to generate an incremental rendering instruction for the shared rendering object;
Step 705: the sharing provider device sends the incremental rendering instruction to the sharing demander device; and
Step 706: the sharing demander device renders the shared rendering object according to the received incremental rendering instruction.

It shall be noted that in accordance with the actual user requirements or scenario requirements, the sharing provider device performs rendering according to the rendering instruction and displays the rendered picture to the sharing provider user. The sharing provider user may also operate the shared rendering object through the rendered picture. The sharing provider device performs application logic processing on the operation information, and generates the rendering instruction according to the operation information of the sharing provider user and sends the rendering instruction to the sharing demander device, thereby achieving the synchronous display between the sharing demander device and the sharing provider device.

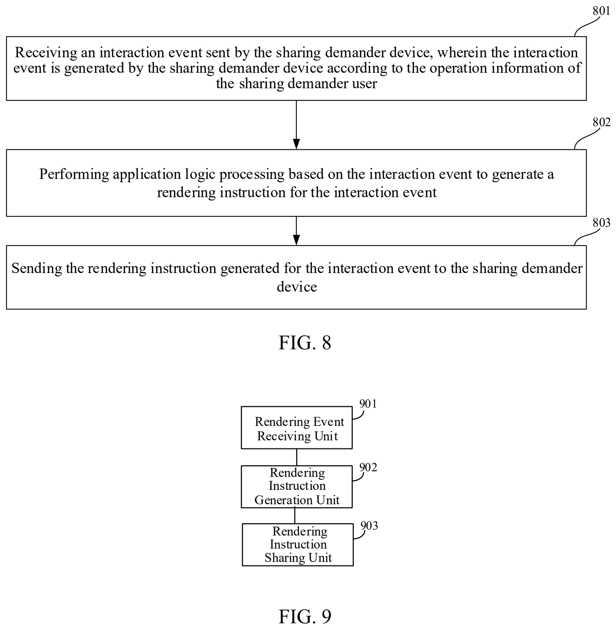

In some other embodiments of the present disclosure, the sharing demander user and the sharing provider user may interact with the shared rendering objects on their respective devices through their respective devices. Specifically, as illustrated in FIG. 8, the sharing provider device may further perform the following steps:
Step 801: receiving an interaction event sent by the sharing demander device, wherein the interaction event is generated by the sharing demander device according to the operation information of the sharing demander user;
Step 802: performing application logic processing based on the interaction event to generate a rendering instruction for the interaction event; and
Step 803: sending the rendering instruction generated for the interaction event to the sharing demander device, so that the sharing demander device performs rendering according to the rendering instruction for the interaction event. The rendering instruction for the interaction event may also be rendered in the sharing provider device.

Of course, the sharing demander device performs rendering according to the rendering instruction for the interaction event and the view information of the sharing demander user, and the sharing provider device performs rendering according to the rendering instruction for the interaction event and the view information of the sharing provider user.

The interaction event may be directed to the shared rendering object also having an interaction function, or to a shared interaction object only having the interaction function. Depending on the shared rendering object or the shared interaction object to which the interaction event is directed, the interaction event is sent to the sharing provider device for application logic processing.

Specifically, if the interaction event is directed to the shared rendering object also having the interactive function, the interaction event sent by the sharing demander device shall be adapted to the shared rendering object, and the following steps are performed:
receiving the rendering instruction for the shared rendering object sent by the sharing provider device, wherein the rendering instruction is generated by the sharing provider device according to an application logic, wherein the rendering instruction is used to guide the generation of the rendered image of the shared rendering object;
generating an interaction event according to the operation information of the sharing demander user;
determining a corresponding transmission path based on the metadata of the shared rendering object to which the interaction event is directed;
performing adaptive conversion on the interaction event based on the metadata of the shared rendering object, and sending the adaptively converted interaction event to the sharing provider device along the corresponding transmission path, so that the sharing provider device executes the application logic according to the interaction event, generates the rendering instruction for the shared rendering object, and sends the rendering instruction to the sharing demander device; and performing conversion on the interaction event to adapt it for the shared rendering object, so as to be more suitable for the transmission and reduce the interaction latency.

The sharing provider device renders the shared rendering object according to the rendering instruction, and the sharing demander device renders the shared rendering object according to the rendering instruction and the view information of the sharing demander user.

In the embodiments of the present disclosure, it can be understood that the application logic of the sharing demander user's operation information on the shared rendering object is not executed on the sharing demander device, but on the sharing provider device. The sharing provider device then generates the rendering instruction according to the interaction event for sharing. Corresponding processing of the application logic is no longer required to be performed on the sharing demander device, and all the application logic is processed on the sharing provider device. In this way, when the number of the sharing demander devices needs to be expanded, each sharing demander device only needs to receive the rendering instruction and perform rendering accordingly, and no longer requires application logic processing, thereby greatly improving the convenience of expansion.

In some other embodiments of the present disclosure, the sharing provider user may further control an interaction permission of the sharing demander user. Specifically, the sharing provider device may send the interaction permission of the shared rendering object to the sharing demander device, so that the sharing demander device generates the interaction event according to the operation information of the sharing demander user when the interaction permission is granted.

It can be understood that more scenario requirements can be met through the above interaction permission control method. For example, in a multi-person collaboration scenario, two or more users use different devices to accomplish a same task in an identical virtual or real environment.

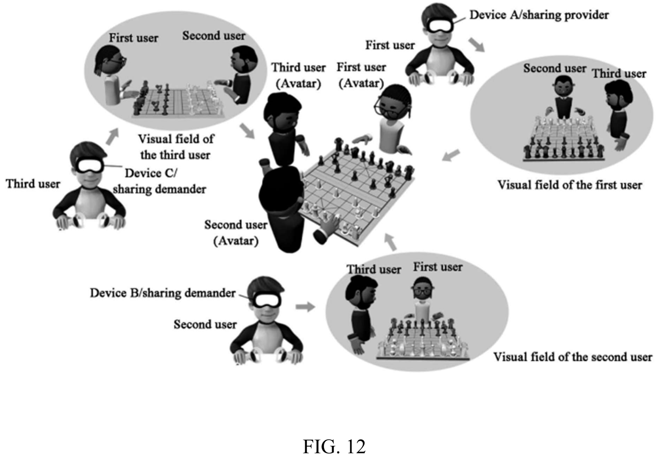

As an example, FIG. 12 illustrates a schematic diagram of three users, i.e., a first user, a second user and a third user, using their respective devices to play chess through an interaction permission control method according to an embodiment of the present disclosure. The first user and the second user play chess using Device A and Device B respectively, the third user uses Device C as an observer to watch the first user and the second user play chess, and Device A, Device B and Device C constitute a multi-person collaboration system. The procedure of multi-person collaboration includes the following steps.

Step 1: a rendering processing module for rendering pictures is installed on Device A, Device B and Device C, respectively, and application logic on a chess game is processed only by Device A.

Step 2: the chess game is run on Device A, a rendering event is received from the first user, the rendering event is processed according to the application logic, and a corresponding rendering instruction (of an incremental type) is generated for each frame. The rendering processing module of Device A completes picture rendering, and the rendered pictures may be displayed on a screen of Device A.

Step 3: the first user activates a sharing mode, and shares the rendering instruction generated by the chess game with Device B of the second user and Device C of the third user.

Step 4: after receiving the rendering instruction for the chess game from Device A, Device B and Device C perform local rendering on respective devices thereof. Of course, the local rendering may be performed according to the view information of each user. In this way, the first user, the second user and the third user can view the content of the chess game simultaneously, with the displayed content matching the viewpoints of the respective devices. The first user, the second user and the third user can each freely move the viewpoint to view the content of the chess game, thereby viewing a chessboard from different angles. This process will not trigger any data transmission, and when the viewpoint changes, the corresponding device only needs to perform rendering again according to the changed view information.

Step 5: the first user may set an interaction permission granted to the second user rather than the third user, thereby achieving the effect that the third user can only watch the game when the first user and the second user play chess. (In other scenarios, the interaction permission may also be granted to multiple users simultaneously to enable multi-person collaborative operations; the scenario in Step 5 is only taken as an example here)

Step 6: the operation of the second user on the chessboard is converted into a corresponding interaction event, which is transmitted from Device B to Device A. The sharing provider device completes the application logic processing on the interaction event, and then returns the rendering instruction for the interaction event corresponding to the operation result. The rendering instruction may be sent to Device A and Device B to perform rendering for the chess game respectively.

Step 7: the above steps are repeated to achieve the effect that the third user only watches the game when the first user and the second user play chess, and the experience is identical to that in a real-world scenario where the three users act the same, thereby well restoring the multi-person collaboration experience and significantly reducing the overhead of rendering and transmission. In addition, neither Device B nor Device C needs application logic processing on the chess game, the sharing experience is more flexible and diverse, and the occupation of the device storage space is relatively low.

Based on the multitasking characteristics of the multitasking system, the above scenario can be further extended to the cases where a plurality of shared rendering objects are shared and operated simultaneously.

In the embodiments of the present disclosure, both an object initialization event and an object adjustment event are initiated by the sharing provider user. Firstly, the sharing provider user performs application logic processing on the object initialization event on the sharing provider device to generate an initial rendering instruction. The sharing demander device renders the shared rendering object initialized by the sharing provider user. Then, both the sharing provider user and the sharing demander user can interact with the rendered object through an input device such as a handheld controller, i.e., initiate the rendered object adjustment event through the input device such as the handheld controller, so as to adjust the shape, the color, the size, etc. of the object, and/or the position of the object. The sharing provider device performs application logic processing on the object adjustment event to generate an incremental rendering instruction, and the sharing demander device performs rendering according to the incremental rendering instruction, thereby enabling the interaction between the user and the shared rendering object.

For example:
Sharing Provider User 1 turns on a device, initializes the color, the size, etc. of a shared rendering object "little dinosaur", and sets the position thereof on a display screen (object initialization event);
Sharing Provider User 1 turns on the device, initializes the size, etc. of a shared rendering object "coconut tree", and sets the position thereof on the display screen (object initialization event);
after obtaining and parsing the object initialization event, the sharing provider device obtains the color, the size, etc. specified by the user to generate metadata of the "little dinosaur", and obtains the position specified by Sharing Provider User 1 to generate the metadata of the "little dinosaur". The sharing provider device then perform a conversion on the metadata of the "little dinosaur" to adapt it for the sharing demander device, generates an initial rendering instruction containing the "little dinosaur", and sends the initial rendering instruction to the sharing demander device;
after obtaining and parsing the object initialization event, the sharing provider device obtains the size, etc. specified by the user to generate the metadata the "coconut tree", and obtains the position specified by Sharing Provider User 1 to generate the metadata of the "coconut tree". The sharing provider device then perform a conversion on the metadata of the "coconut tree" to adapt it for the sharing demander device, generates an initial rendering instruction containing the "coconut tree", and sends the initial rendering instruction to the sharing demander device;
the sharing demander device renders the "little dinosaur" and the "coconut tree" according to the initial rendering instruction containing the "little dinosaur" and the initial rendering instruction containing the "coconut tree";
Sharing Demander User 2 wants to move the "little dinosaur" to the position under the "coconut tree", and adjusts the pose of the "little dinosaur" on its own rendered picture;
the sharing demander device generates an interaction event according to the operation information of the adjustment performed by Sharing Demander User 2, and sends the interaction event to the sharing provider device;
after obtaining the interaction event of the "little dinosaur", the sharing provider device performs application logic processing, extracts the distance adjusted by Sharing Demander User 2, generates pose incremental information of the "little dinosaur" according to the distance adjusted by Sharing Demander User 2, generates a rendering instruction for the "little dinosaur", and sends the rendering instruction to the sharing demander device;
the sharing demander device recalculates the occlusion relationship between the "little dinosaur" and the "coconut tree" according to the rendering instruction for the "little dinosaur", etc., and re-renders the "little dinosaur" and the "coconut tree".

Through the method of the present disclosure, when the shared rendering object is moved or changed, the sharing provider device only needs to send the rendering instruction for the shared rendering object to the sharing demander device, thereby reducing the data transmission pressure.

In some other embodiments of the present disclosure, after the sharing provider user initializes the shared rendering object, there may be no need to adjust the object for a period of time. The object only needs to remain stationary or move regularly on the display screen in accordance with the logic set by the sharing provider device. In such cases, to further reduce the amount of data transmission between the sharing provider device and the sharing demander device, the metadata of the shared rendering object further includes a motion model of the shared rendering object. With continued reference to FIG. 7, the method further includes the following steps:
Step 707: the sharing provider device performs application logic processing on the motion model to generate a model rendering instruction for the shared rendering object, and sends the model rendering instruction to the sharing demander device; and
Step 708: the sharing demander device renders the shared rendering object according to the received model rendering instruction.

In the embodiments of the present disclosure, the motion model may specify the motion laws of the shared rendering object. After sending the model rendering instruction to the sharing demander device, the sharing provider device no longer needs to send additional rendering instructions to the sharing demander device. The sharing demander device calculates the metadata increment and the position increment of the shared rendering object in real time according to the model rendering instruction, and dynamically renders the shared rendering object in real time, thereby reducing the amount of data transmission between the sharing provider device and the sharing demander device.

Based on the same inventive concept, an embodiment of the present disclosure further provides a multi-person collaboration apparatus for 3D content. As illustrated in FIG. 9, the apparatus includes:
a rendering instruction generation unit 902 configured to generate a rendering instruction for a shared rendering object according to an application logic, wherein the rendering instruction is used to guide the generation of the rendered image of the shared rendering object; and
a rendering instruction sharing unit 903 configured to send the rendering instruction to a sharing demander device in a multi-person collaboration system, so that the sharing demander device renders the shared rendering object according to the received rendering instruction to obtain a rendered picture.

In addition, the apparatus may further include a rendering event receiving unit 901 configured to receive a rendering event.

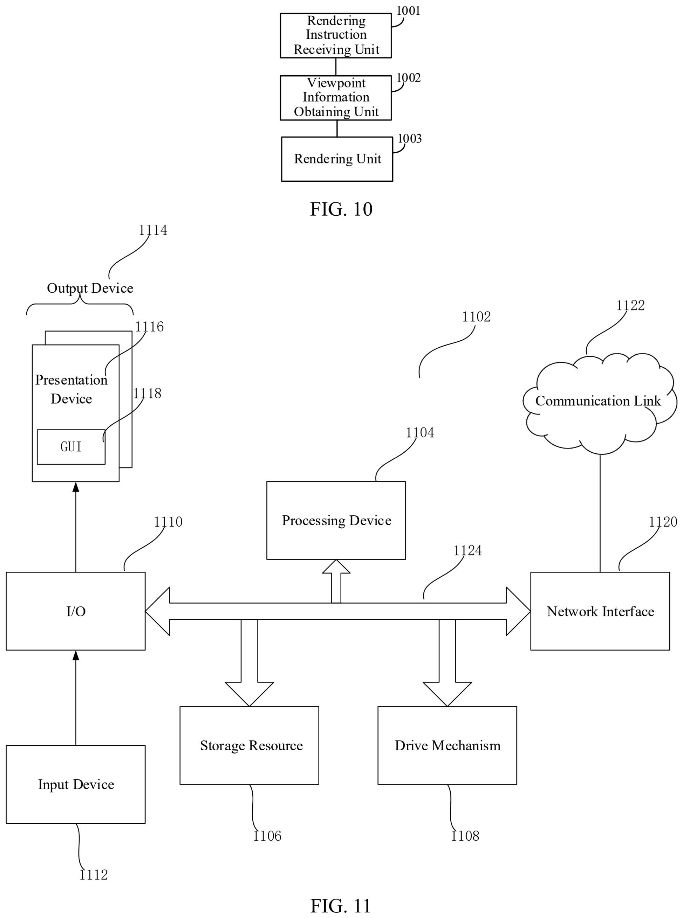

Correspondingly, an embodiment of the present disclosure further provides a multi-person collaboration apparatus for 3D content. As illustrated in FIG. 10, the apparatus includes:
a rendering instruction receiving unit 1001 configured to receive a rendering instruction for a shared rendering object sent by a sharing provider device, wherein the rendering instruction is generated by the sharing provider device according to an application logic, wherein the rendering instruction is used to guide the generation of the rendered image of the shared rendering object;
a view information obtaining unit 1002 configured to obtain view information of a sharing demander user according to the sharing demander device; and
a rendering unit 1003 configured to render the shared rendering object according to the view information of the sharing demander user and each of the rendering instructions to obtain a rendered picture containing the shared rendering object.

Further, an embodiment of the present disclosure further provides a multi-person collaboration system for 3D content, including a sharing provider device and a sharing demander device;
the sharing provider device, during rendering, executes the method performed by the afore-mentioned sharing provider device; and
the sharing demander device, during rendering, executes the method performed by the afore-mentioned sharing demander device.

The advantageous effects achieved by the afore-mentioned apparatus and system are consistent with those achieved by the afore-mentioned method, and will not be repeated in the embodiments of the present disclosure.

FIG. 11 illustrates a structural diagram of a computer device according to an embodiment of the present disclosure. The apparatus in the present disclosure may be the computer device in this embodiment, which performs the method of the present disclosure as described above. The computer device 1102 may include one or more processing devices 1104, such as one or more central processing units (CPUs), each of which can implement one or more hardware threads. The computer device 1102 may further include any storage resource 1106 to store any type of information such as codes, settings, data, etc. Without limitation, for example, the storage resource 1106 may include any one or combinations of any type of Random-access Memory (RAM), any type of Read-Only Memory (ROM), a flash memory device, a hard disk, an optical disk, etc. More generally, any storage resource may store information using any technology. Further, any storage resource may provide a volatile or nonvolatile retention of information. Further, any storage resource may provide volatile or non-volatile retention of information. Further, any storage resource may represent a fixed or removable component of the computer device 1102. In a case where the processing device 1104 executes associated instructions stored in any storage resource or combination of storage resources, the computer device 1102 may perform any operation of the associated instructions. The computer device 1102 further includes one or more drive mechanisms 1108 (e.g., a hard disk drive mechanism, an optical disk drive mechanism, etc.) for interacting with any storage resource.

The computer device 1102 may further include an Input/Output (I/O) module 1110 configured to receive various inputs (via an input device 1112) and to provide various outputs (via an output device 1114). A specific output mechanism may include a presentation device 1116 and an associated graphical user interface (GUI) 1118. In other embodiments, the Input/Output (I/O) module 1110, the input device 1112, and the output device 1114 may be not included, and the computer device 1102 may only serve as a computer device in a network. The computer device 1102 may further include one or more network interfaces 1120 configured to exchange data with other devices via one or more communication links 1122. One or more communication buses 1124 couple the components described above together.

The communication link 1122 may be implemented in any manner, for example, by a local area network, a wide area network (e.g., the Internet), a point-to-point connection, etc., or any combination thereof. The communication link 1122 may include any combination of a hardwired link, a wireless link, a router, a gateway function, a name server, etc. governed by any protocol or combination of protocols.

An embodiment of the present disclosure further provides a computer-readable storage medium, wherein the computer-readable storage medium stores a computer program which, when executed by a processor, implements the afore-mentioned method.

An embodiment of the present disclosure further provides a computer-readable instruction, wherein when the instruction is executed by a processor, a program therein enables the processor to perform the afore-mentioned method.

It shall be understood that in various embodiments of the present disclosure, the size of the sequence numbers of the above processes do not indicate the order of execution. The order of execution of each process shall be determined by the function and internal logic thereof, and shall not constitute any limitation to the implementation process of the embodiments of the present disclosure.

## Claims

1. A multi-person collaboration method for three-dimensional (3D) content, which is applicable to a multi-person collaboration system comprising devices supporting 3D content display, and performed by a sharing provider device in the multi-person collaboration system, the method comprising:
generating, according to an application logic, a rendering instruction for a shared rendering object, wherein the rendering instruction is used to guide generation of the rendered image of the shared rendering object; and
sending the rendering instruction to a sharing demander device in the multi-person collaboration system, so that the sharing demander device renders the shared rendering object according to the received rendering instruction to obtain a rendered picture.

2. The method according to claim 1, wherein the generating, according to an application logic, a rendering instruction for a shared rendering object further comprises:
parsing a triggered rendering event to obtain metadata of the shared rendering object, wherein the metadata of the shared rendering object comprises descriptive information and attribute information of the shared rendering object; and
performing a conversion on the metadata of the shared rendering object to adapt it for the sharing demander device, and generating a rendering instruction for the shared rendering object.

3. The method according to claim 2, wherein the triggered rendering event comprises a rendering event triggered by operation information of a sharing provider user and/or a sharing demander user;
wherein the sharing demander device rendering the shared rendering object according to the received rendering instruction specifically comprises:
rendering, by the sharing demander device, the shared rendering object according to the received rendering instruction and view information of the sharing demander user.

4. The method according to claim 2, wherein the metadata of the shared rendering object further comprises incremental information, and the rendering event comprises an object initialization event and an object adjustment event;
wherein the method further comprises:
performing application logic processing on the object initialization event to generate an initial rendering instruction for the shared rendering object, and sending the initial rendering instruction to the sharing demander device, so that the sharing demander device renders the shared rendering object according to the received initial rendering instruction; and
performing application logic processing on the object adjustment event to generate an incremental rendering instruction for the shared rendering object, and sending the incremental rendering instruction to the sharing demander device, so that the sharing demander device renders the shared rendering object according to the received incremental rendering instruction.

5. The method according to claim 2, wherein the metadata of the shared rendering object further comprises a motion model of the shared rendering object;
wherein the method further comprises:
performing application logic processing on the motion model of the shared rendering object to generate a model rendering instruction for the shared rendering object, and sending the model rendering instruction to the sharing demander device, so that the sharing demander device renders the shared rendering object according to the model rendering instruction.

6. The method according to claim 1, further comprising:
performing application logic processing based on the interaction event to generate a rendering instruction for the interaction event, wherein the interaction event is triggered by operation information of a sharing demander user and sent by the sharing demander device; and
sending the rendering instruction generated for the interaction event to the sharing demander device, so that the sharing demander device performs rendering.

7. The method according to claim 6, wherein before receiving the interaction event sent by the sharing demander device, the method further comprises:
sending an interaction permission to the sharing demander device, so that the sharing demander device generates the interaction event according to the operation information of the sharing demander user when the interaction permission is granted.

8. A multi-person collaboration method for three-dimensional (3D) content, which is applicable to a multi-person collaboration system comprising devices supporting 3D content display, and performed by a sharing demander device in the multi-person collaboration system, the method comprising:
receiving a rendering instruction for a shared rendering object sent by a sharing provider device, wherein the rendering instruction is generated by the sharing provider device according to an application logic, wherein the rendering instruction is used to guide generation of the rendered image of the shared rendering object;
obtaining view information of a sharing demander user; and
rendering the shared rendering object according to the view information of the sharing demander user and each of the rendering instructions to obtain a rendered picture containing the shared rendering object.

9. The method according to claim 8, wherein the rendering instruction being generated by the sharing provider device according to an application logic further comprises:
parsing, by the sharing provider device, a triggered rendering event to obtain metadata of the shared rendering object, wherein the rendering event comprises operation information of a sharing provider user, and the metadata of the shared rendering object comprises descriptive information and attribute information of the shared rendering object; and
performing a conversion on the metadata of the shared rendering object to adapt it for the sharing demander device, and generating a rendering instruction for the shared rendering object.

10. The method according to claim 9, wherein the metadata of the shared rendering object further comprises incremental information, the rendering event comprises an object initialization event and an object adjustment event, an initial rendering instruction is generated by the sharing provider device performing application logic processing on the object initialization event, and an incremental rendering instruction is generated by the sharing provider device performing application logic processing on the object adjustment event;
wherein the method further comprises:
rendering the shared rendering object according to the received initial rendering instruction and the view information of the sharing demander user; and
rendering the shared rendering object according to the received incremental rendering instruction and the view information of the sharing demander user.

11. The method according to claim 9, wherein the metadata of the shared rendering object further comprises a motion model of the shared rendering object, and a model rendering instruction is generated by the sharing provider device performing application logic processing on the motion model of the shared rendering object;
wherein the method further comprises:
rendering the shared rendering object according to the received model rendering instruction and the view information of the sharing demander user.

12. The method according to claim 8, further comprising:
generating an interaction event according to operation information of the sharing demander user; and
sending the interaction event to the sharing provider device, so that the sharing provider device executes the application logic based on the interaction event.

13. The method according to claim 12, wherein
the sending the interaction event to the sharing provider device further comprises:
determining a corresponding transmission path based on metadata of the shared rendering object to which the interaction event is directed; and
performing adaptive conversion on the interaction event based on the metadata of the shared rendering object, and sending the adaptively converted interaction event along the corresponding transmission path.

14. The method according to claim 12, wherein before generating an interaction event according to operation information of the sharing demander user, the method further comprises:
receiving an interaction permission sent by the sharing provider device; and
generating the interaction event according to the operation information of the sharing demander user when the interaction permission is granted.

15. A computer device, comprising a memory, a processor, and a computer program stored in the memory and runnable on the processor, wherein when executing the computer program, the processor implements the method according to any one of claims 1 to 14.
